# EUROPEAN PATENT SPECIFICATION

(11) **EP 0 402 719 B1**
(45) Date of publication and mention of the grant of the patent: **08.12.1993**
(21) Application number: 90110499.2
(22) Date of filing: 01.06.1990
(51) Int. Cl.: F02B 61/06, F02B 75/20, B60K 5/04

(54) **An automitive internal combustion engine**
Fahrzeugbrennkraftmaschine
Moteur à combustion interne pour automobiles

(30) Priority: 03.06.1989 JP 141495/89; 23.08.1989 JP 216995/89
(43) Date of publication of application: 19.12.1990
(73) Proprietor: YAMAHA HATSUDOKI KABUSHIKI KAISHA, Iwata-shi Shizuoka-ken, 438 (JP)
(72) Inventor: Okui, Kaoru, Iwata-Shi, Shizuoka-ken 438 (JP); Kobayashi, Manabu, Iwata-Shi, Shizuoka-ken 438 (JP)
(74) Representative: Grünecker, Kinkeldey, Stockmair & Schwanhäusser Anwaltssozietät

(56) References cited:
- EP-A- 0 335 246
- FR-A- 2 032 160
- GB-A- 2 179 604
- US-A- 4 129 043
- US-A- 4 794 885

## Description

The invention relates to an automotive internal combustion engine comprising an engine unit having a crankshaft extending transversely to the longitudinal axis of the vehicle across the engine compartment, a cylinder bank which is inclined rearwardly from a vertical plane and an output shaft which is disposed in parallel with the crankshaft and, among others, is adapted to transmit the output power of the crankshaft to the wheel shafts. More specifically, the invention relates to a small-sized compacted space saving engine which, inspite of its compacted structure enables the engine oil to be efficiently cooled.

In recent vehicle construction there is a tendency to design the automotive engine in a small-sized compact and light weight structure in order to reduce the space for accommodating the engine as much as possible. This provides an optimal spacious passenger compartment so as to afford roominess and amenity for the passengers. In order to reduce the size of the engine compartment required for accommodating the engine, the engine normally extends transversely across the engine compartment in a front wheel drive, front engine configuration. On the other hand also rear engine, rear wheel drive configurations could be selected under the afore-indicated space saving aspects.

In case of adopting the transverse engine concept, the oil pan for collecting the engine oil is normally disposed directly below the crankshaft of the engine resulting in an increased engine height caused by a longer distance in between the crankshaft and the bottom of the oil pan. Moreover, as far as transverse engines were mounted in the engine compartment in a manner that the in-line multi-cylinder arrangement of the cylinder bank was inclined rearwards with respect to a vertical plane containing the axis of the crankshaft, the disposal of the first and secondary drive chains for driving the cam shafts and further accessory devices including the location of the output shaft has led to a relatively bulky structure of the engine at the lower front portion thereof which, is undesirable not only from the view point of increased compactness and lowered noise emission but also from the aspect of engine oil cooling taking the lowered disposal of the engine oil tank into consideration.

Accordingly, it is desirable for an improved engine oil cooling that the oil pan comprises a forwardly projected portion having an increased surface exposed to the incoming flow of cooling air under vehicle travelling conditions. In case of increasing the front face of the oil pan to obtain a larger forwardly facing or projecting portion of same with the afore-mentioned prior art structure, it becomes necessary to extend the oil pan more downwardly. Apparently, such a measure further affects the dimension of the engine unit adversely resulting in the engine height becoming larger.

From EP-A-0335246, an engine unit for a motor vehicle is known which comprises a rearwardly inclined cylinder bank while a plane containing the axes of the output shaft and crankshaft extends perpendicularly with respect to a plane containing the axes of the cylinder bores of the cylinder bank. This document belongs to the state of the art under Article 54 (3) EPC.

Accordingly, it is a main objective of the present invention to provide an improved automotive internal combustion engine having a further compacted structure in order to reduce the length of the engine in transverse direction of the vehicle and the width of the engine with respect to the longitudinal axis of the vehicle under transverse orientation of the engine in the engine compartment of the vehicle.

Moreover, it is preferred to provide a compacted automotive internal combustion engine which employs improved provisions for assembling an oil tank such that its forwardly projecting portion is large to expose an increased surface of same to the incoming cooling air in order to improve the oil cooling capacity of the engine.

In order to achieve the afore-mentioned objective, the present invention comprises a crankshaft extending transversely to the longitudinal axis of the vehicle, a cylinder bank which is inclined rearward and an output shaft which is disposed in parallel with the crankshaft for transmitting the output power of the crankshaft to wheel shafts, wherein said output shaft of the engine is disposed slantly forwardly above said crankshaft in such a manner that a plane including both the axis of the crankshaft and the axis of the output shaft intersects with a plane including the cylinder axis of the cylinder bank at an acute angle.

According to an advantageous embodiment of the present invention, an oil tank is disposed beneath and slantly forwardly of the said plane which includes both the axis of the crankshaft and the axis of the output shaft so as to locate the oil tank generally infront of the crankshaft/output shaft assembly with an increased outer surface of the oil tank facing the front of the vehicle.

Other advantageous embodiments of the present invention are laid down in the other subclaims.

Specifically, the automotive internal combustion engine according to the present invention is preferrably designed such that the rearwardly inclined cylinder bank is adapted to overlay the front wheel shafts of the vehicle with the crankshaft being disposed substantially in front of said front wheel shafts. Such a design directed to a transverse engine in front wheel drive, front engine configuration enables the dimensions of the engine compartment to be reduced in travelling direction of the vehicle.

According to the above-indicated preferred embodiment of the present invention, the oil tank is disposed substantially in front of the crankshaft/output shaft assembly which not only results in an improved engine oil cooling efficiency but also contributes to reduce the overall height of the engine. According to another aspect of the present invention, the intention to minimize the height of the internal combustion engine as well is promoted in that each cylinder head of each cylinder is supplied with intake air through an associated intake pipe comprising a curved portion associated to the cylinder head and disposed adjacent to an alternator and, a straight portion connected to a surge tank at the end of said portion.

Finally, according to another advantageous embodiment of the present invention the overall length of the motor block structure including cam shaft assembly, an accessory auxiliary drive pulley is disposed on the output shaft, which extends in parallel to the cam shaft, instead of being located at one end of the crankshaft. Thus, the overall length of the engine is reduced without affecting the relatively simple structure and facilitated assembly of the engine.

Moreover, preferrably a gear transmission is provided to transmit the rotational speed of the crankshaft to the output shaft applying a transmission ratio selected to slightly slow down the rotational speed of the output shaft approximately to half of the rotational speed of the cam shaft.

Finally, according to yet another preferred embodiment of the present invention the output shaft is provided with a fly wheel and a clutch mechanism to transmit the engine power to the wheel shafts via a transmission. Preferrably, either a single plate dry-type clutch disposed on one end of the output shaft or a hydraulic torque converter associated to an automatic transmission and disposed on one end of the output shaft is provided in order to transmit the engine output to the transmission.

Since the oil tank is disposed forwardly of the engine and slantly forwardly on the plane including both the crankshaft axis and the output shaft axis, the forwardly projected surface area of the oil tank is enlarged so that it can easily catch the travelling wind resulting in an improved oil cooling capacity of the system. Further merits of the present invention originate from the feature that the plane connecting the axis of the crankshaft and the axis of the output shaft intersects with a plane formed by the axis of the cylinder barrels intersects at an acute angle and, moreover said plane is steeply inclined to approach to the vertical, enabling the oil tank to extend toward along the definite engine height to expose a maximum surface portion of the oil tank facing forwardly to the flow of cooling air resulting in a more effective cooling of the oil tank and improving the cooling capacity of the engine.

Further objectives, features and advantages of the present invention will become more apparent from the following description of specific embodiments of the present invention in conjunction with the associated drawings wherein:
Figure 1 is a side view of an automotive internal combustion engine according to the present invention as mounted as transverse engine into an engine compartment,
Figure 2 is a diagramatic plan view of the engine according to Figure 1 mounted as a transverse engine into an engine compartment,
Figure 3 is a side view of the automotive internal combustion engine according to Figure 1, but from the opposite side,
Figure 4 is a front view of the automotive internal combustion engine as shown in Figure 1,
Figure 5 is a partially broken away side view of the automotive internal combustion engine as shown in Figure 1,
Figure 6 is a sectional view along the line VI-VI in Figure 5, partially in a diagramatic illustration,
Figure 7 is a sectional partial view similar to the right-hand portion of Figure 6 disclosing another embodiment of the clutch mechanism associated to the output shaft of the engine.

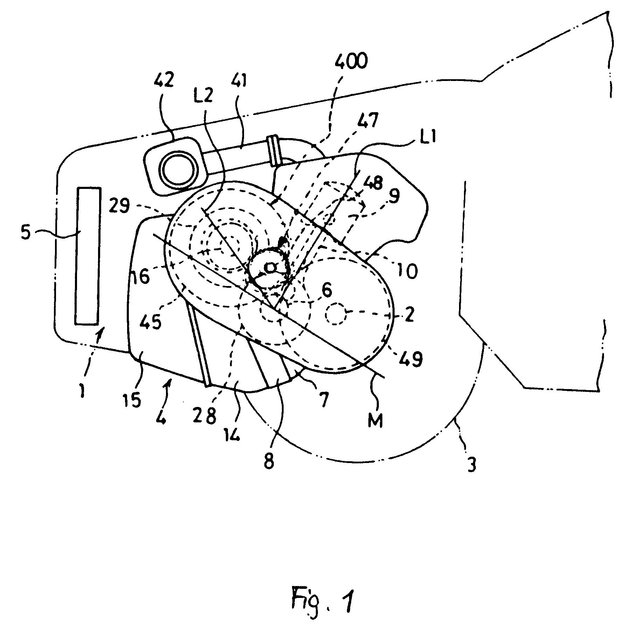

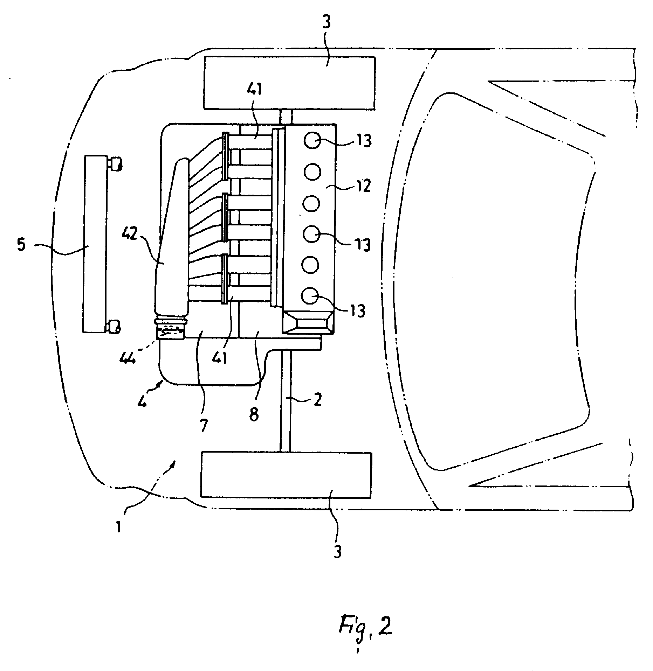

Referring first to Figures 1 and 2, an engine compartment of a motor vehicle adapted to accommodate an internal combustion engine according to an embodiment of the present invention is denoted by reference numeral 1. In this case, the vehicle equipped with an engine embodying the invention is of the front engine, front wheel drive type wherein the engine compartment 1 is formed above and between the right and left wheels 3 connected through front wheel shafts 2 connected to the front drive power train of the vehicle. Within the engine compartment 1 as an engine unit 4 a four-stroke six cylinder internal combustion engine is mounted with its radiator 5 being located in front of this engine unit 4. The engine unit 4 is a transversely disposed front engine with its crankshaft 6 extending transversely with respect to the travelling direction of the vehicle, thus, enabling to reduce the size of the engine compartment 1 and to enlarge the passenger compartment to render it spacious as much as possible.

The crankshaft 6 of the engine 4 is journalled between a cylinder block 7 and a bearing case 8 connecting each piston 9, slidably received in the associated cylinder through a connecting rod 10 to the crankshaft 6. A cylinder head 11 is fixed to the cylinder block 7 and is provided with a head cover 12 and, each cylinder is provided with an ignition plug 13 in a usual manner.

The bearing case or crankcase 8 is provided with an oil pan 14 connected to an oil tank 15 which is disposed facing the front of the vehicle and extending from the bottom to the top of the internal combustion engine substantially through the entire height of the engine.

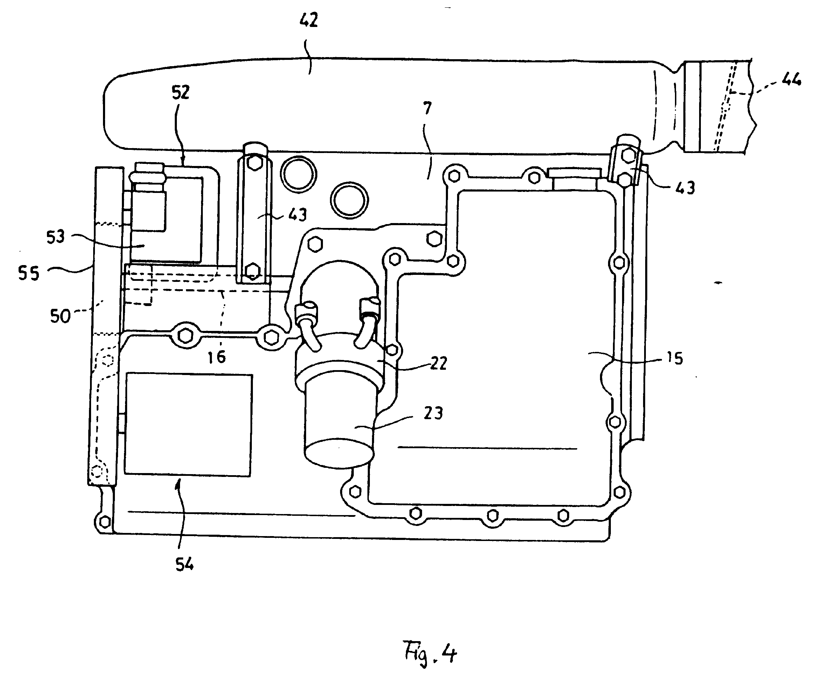

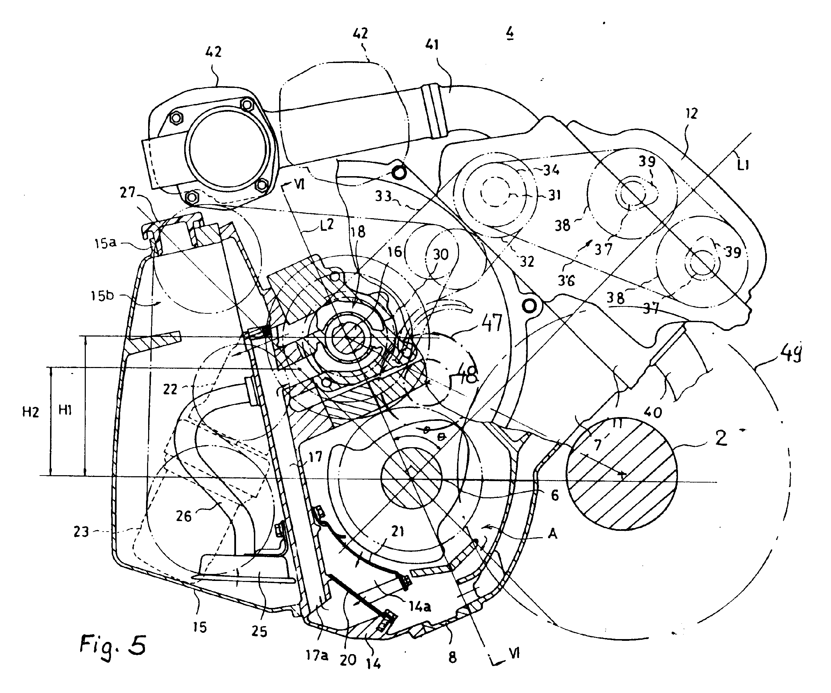

As indicated above and depicted in the drawings the internal combustion engine is shown to be an in-line, six cylinder four cycle type engine, said individual cylinders forming a cylinder bank which is inclined backwards with respect to a vertical plane as the cylinder bore axis of the cylinders define a plane that is inclined rearwardly from the vertical. Said inclination, is specifically shown in Figures 1, 3 and 5 of the present application. In order to transmit the output power of the engine to the main driven wheels via a clutch mechanism 46 and a transmission 47, an engine output shaft 16 transmitting the output power of the engine, is disposed in parallel to the crankshaft 6 and, is disposed slantly forwardly above the crankshaft 6 as specifically shown in Figures 1, 3 and 5. The disposal of the output shaft 16 with respect to the location of the crankshaft 6 is chosen such that a plane L2 including both the axis of the crankshaft 6 and the axis of the output shaft 16 intersects with a plane L1 defined by the cylinder axis at an acute angle (ϑ). (See Figures 1 and 5). In this way, the engine unit 4 can be compacted to a V-shape of its main axes with the vertex being determined through the low positioned crankshaft 6. The oil tank 15 is disposed slantly forwardly beneath or in front of the plane L2 enabling an increased surface of the oil tank to face the front of the vehicle to be disposed to the cooling air flow when the vehicle moves forward (see Figure 4, Figure 5, Figure 3 and Figure 1).

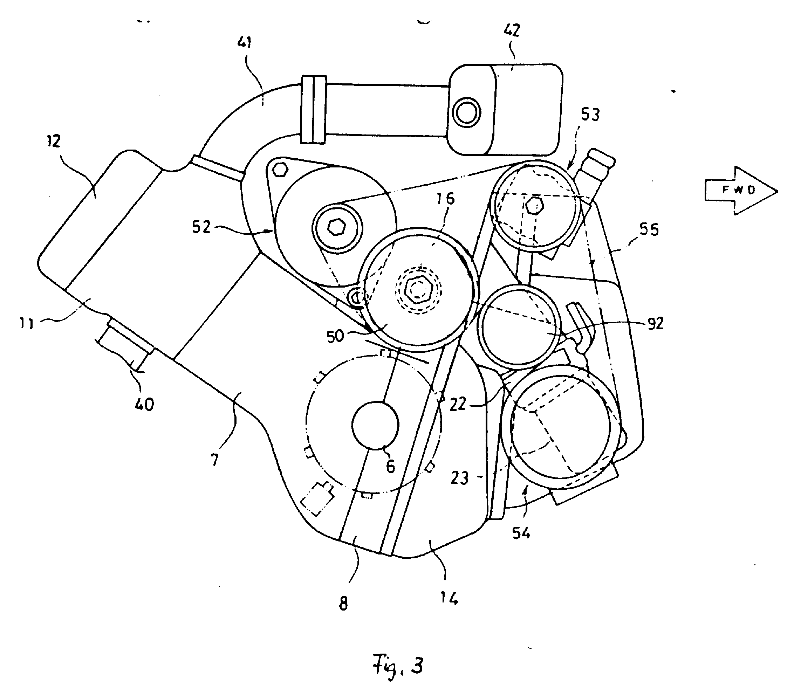

In this way, by means of positioning the output shaft 16 at the side of the parallel to the crank shaft and, moreover, in such a manner that the angle (ϑ) formed between the plane L1 (plane of the cylinder axis) and the plane L2 (defined by the axis of the crankshaft 6 and the output shaft 16) is an acute angle, the height H1 is increased and becomes larger than a notional height H2 obtained in a conventional system in which the angle 0 is a right angle (Figure 3). Accordingly, the compacted design of the engine results in improved oil cooling capacity enabling the oil tank 15 to be mounted in front of the cam shaft/output shaft assembly with an increased forwardly projecting surface area of the oil tank 15 being exposed to the flow of cooling air under vehicle running conditons. Thus, the oil tank 15 reserving the engine oil, is located slantly forwardly under crankshaft 6 and the output shaft 16 and faces to the front of the vehicle as shown by the arrow mark FWD in Figure 3.

Moreover, as the output shaft 16 is disposed at the same side slantly above the crankshaft 6 in such a manner that the afore-mentioned angle 0 becomes an acute angle, the distance between the output shaft 16 and the front wheel shafts 2 is reduced resulting in a reduced width of the engine in the longitudinal direction (traveling direction) of the vehicle. Accordingly, the dimension of the vehicle compartment in longitudinal direction of the vehicle can be shortened allowing to achieve a spacious passenger compartment without increasing the overall length of the vehicle.

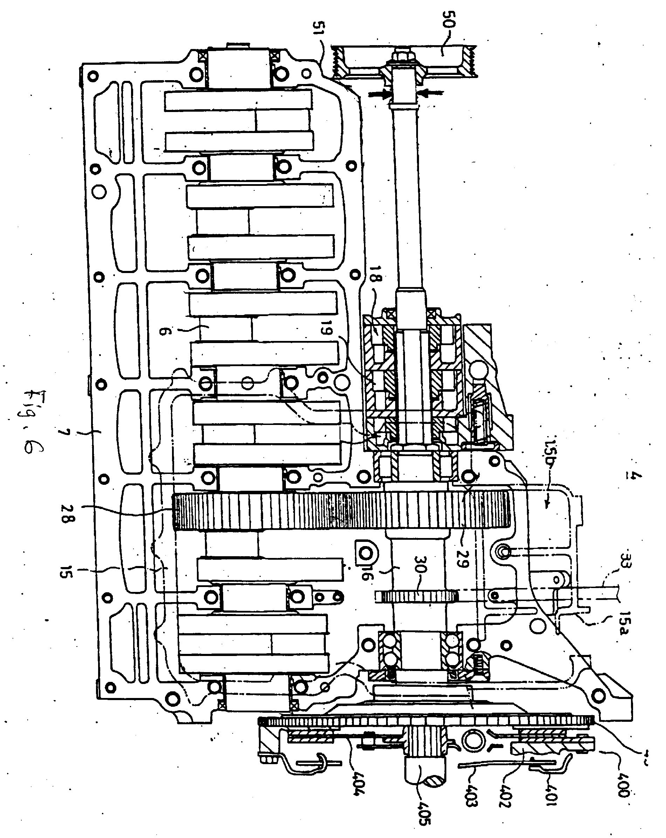

As shown in Figure 5, the oil pan 14 has a pair of oil passages 17 extending substantially vertically through both sides of a guide portion 14a and, through each of the passages 17 oil is sucked in through an inlet port 17a at the bottom of the oil passage 17 by oil pumps 18 and 19 disposed on the output shaft 16 (Figure 6). After having lubricated various portions of the engine the oil is collected at the bottom of the crank chamber A, formed with the cylinder block 7, the bearing case 8 and the oil pan 14. The inlent port 17a is provided with a net or sieve structure 20 so that dust or foreign metal is prevented from entering into the oil passages 17 and cannot be sucked in. In order to avoid oil splashing through the cam shaft rotation causing a power loss of the cam shaft 6 during rotation, a plate 21 is mounted inside the oil pan 14 on a guide portion 14a.

The oil pumps 18 and 19 are adapted to feed the oil through an oil cooler 22 and a filter 23 (Figure 4) and the oil reserved in the oil tank 15 is sucked through a strainer 25 disposed at the bottom of the oil tank 15 and, a pipe 26 extending from the strainer 25 upwardly and is fed to various lubricating points spread inside the engine by another oil pump 24 provided on the output shaft 16 of the engine (Figure 6). The oil tank 15 is provided with an oil refill mouth 15a closed by a refill cap 27 and, moreover, is provided with a breather portion 15b forming a labyrinth through partitions (not shown) so that oil may not leak out through the oil refill mouth 15a.

The new location of the oil tank 15 to extend more vertically, as a result of the compacted engine structure, disposes the output shaft 16 closer to the cylinder block 7, rendering the top wall of the oil tank 15 through which the oil refill mouth 15a extends or is bored to be approximately horizontal. Thus, an oil refill operation through said oil refill mouth 15a is easier to perform than a refill operation through a conventional port provided through the head cover.

As is shown in Figure 6, the output shaft 16 is driven by the crankshaft 6 through a gear transmission with a gear 28 mounted on the crankshaft 6 being in mesh, with a gear 29 mounted on the output shaft 16. The diameter and number of teeth of the gears 28, 29 is selected such, that a reduction gear ratio is obtained to slightly slow down the speed of the output shaft 16. As can also be derived from Figure 5, a gear 30 mounted on the output shaft 16 is connected to a gear 32 on a countershaft 31, journalled by the cylinder head 11, through a first chain 33 and a gear 34 mounted on said countershaft 31 is connected to gears 38 on cam shaft 37 of the valve operating mechanism 36, through a second drive chain 35 so that the cam shafts 37 are rotated by the revolution of the crankshaft 6. The cams 39 are rotated together with their cam shafts 37 and operate the intake and exhaust valves (not shown) with predetermined timings.

As indicated through Figures 1 to 5 the cylinder head 11 comprises exhaust pipes 40 and intake pipes 41 connected to each of the cylinders. Each intake pipe 41 is connected to a surge tank 42 which extends transversely and substantially in parallel to the cylinder block 7 supported therein through stays 43 (see Figures 2 to 4). The surge tank 42 is provided with a throttle valve 44 at its inlet end side and tapers from the upstream to the downstream side so that its cross-sectional area gradually reduces in order to increase the air flow speed of the intake air flowing from the upstream to the downstream side of the surge tank. Moreover, the farther the respective intake pipe 41 is positioned from the inlet end of the surge tank 42, the smoother is said air intake pipe 41 connected to said surge tank 42, i.e. the angle of connection of each intake pipe 41 to the surge tank 42 varies over the length of the surge tank in direction of the downstream flow of the intake air, so that air may be evenly supplied to each of the cylinders through the respective associated intake pipe 41.

In the drawings, the surge tank 42 is positioned above the oil tank 15 (Figure 1, Figure 3, Figure 5), but it may also be positioned above the output shaft 16 as shown in phantom in Figure 5.

With conventional engines usually the auxiliaries, such as alternator, power steering pump, air compressor or the like, are driven by an accessory drive pulley which is located at one end of the crankshaft. This, however, results in an undesirable increase of the overall length of the engine. In order to reduce the overall length of the engine, the present invention sets out the accessory drive pulley 50 to be disposed on one end of the output shaft 16 so as not to add anything to the overall length of the engine which is determined through the length of the crankshaft. In order to acquire said effects, a concave 51 is provided at the cylinder 7 and/or the associated portion of the crankcase 8 opposite to the main end bearing of the crankshaft 6 and the outer periphery of the pulley 50 is positioned such that it enters said concave 51 accordingly. The output shaft bearing for rotatably supporting the end of the output shaft 16 inwardly adjacent to the accessory drive pulley 50 is not shown in detail, but, is only indicated diagramatically by two opposite arrows. The accessory drive arrangement is specifically shown in Figure 3 indicating a belt 55 to be wound around the pulley 50 and auxiliary pulleys for accessories such as an alternator 52, a power steering pump 53 and an air compressor 55 to drive them synchronously by the revolution of the output shaft 16. From Figure 3, the compacted layout of the engine unit 4 leading to a compacted accessory drive assembly as well, is clearly derivable. As shown in Figure 4, the oil tank 15 and the afore-mentioned accessory devices such as alternator 52, power steering pump 53 and air compressor 54 are disposed in front of the cylinder bank and, in addition, on one or the other side of the engine. So that an improved weight balance of the engine in direction of the crankshaft 6 may be obtained.

Moreover, since the oil pump 15 and the auxiliary devices, such as alternator 52, power steering pump 53 and air compressor 54 can be disposed without overlapping with each other in the width direction of the engine (longitudinal direction of the vehicle) the width of the engine in the longitudinal direction of the vehicle can be reduced rendering the engine compact.

Moreover, as said accessory devices 52, 53 and 54 are disposed facing the front of the vehicle and, as an external machinery driven by the output of the output shaft 16 through the crankshaft 6, are exposed to the travelling wind when the vehicle rides, all said auxiliary devices can be efficiently cooled. Finally, it should be noted, that a water inlet port 7a and a water outlet port 7b (Figure 4) are formed on the front surface of the cylinder block 7 facing the front of the vehicle and adapted to supply the cooling water to a radiator 5 through the water outlet port 7a and, to return it from the radiator 5 to a water pump through the water inlet port 7b tubing, to connect the radiator 5 to the cylinder block, is facilitated and cooling efficiency is improved.

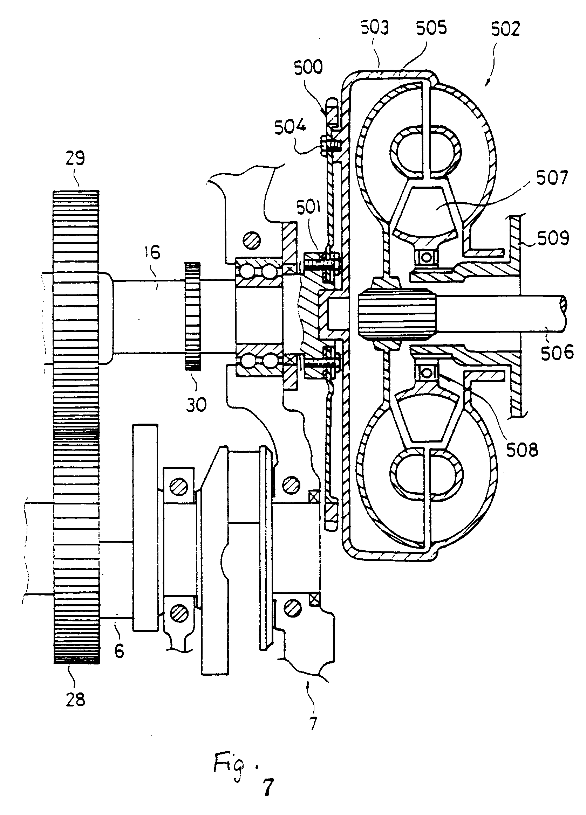

Turning once again to Figures 6 and the partial view of Figure 7 modified engine output transfer systems are shown adapted to provide clutch mechanism connected by a driven shaft to a change speed gear (Figure 6) or, a continuously adjustable automatic transmission (Figure 7). In Figure 6 the output shaft 16 is provided with a fly wheel 45 and a clutch mechanism 400 at the other end opposite to the accessory drive pulley 50 to transmit the engine power to the front wheel shaft 2 of the front wheels 3 through a transmission 47. As indicated in Figure 1, the engine height can be reduced by installing the fly wheel 45 and the clutch mechanism 400 on the output shaft 16 as compared with the conventional case where they are mounted on the crankshaft of the engine. The transmission 47, with its primary and secondary sides disposed on the output shaft 16 and on a countershaft 48, respectively, drives the front wheel shafts 2 through a final gear 49 mounted on a wheel shaft 2.

Due to the acute angle (0) in between the plane L1 and L2, the diameter of the final gear 49 associated to the drive wheel shafts can be considerably reduced enabling the countershaft 48 supporting the transmission 47 to be lowered downwardly to render the engine more compact than conventional. As is derivable from figures 1 and 5 in contrast to structures comprised in the art, the countershaft substantially coincides with a notional plane connecting the axis of the wheel shafts to end the output shaft 16.

The reduction of the diameter of the final gear 49 supported by a drive shaft 2 is of considerable importance in as far as normally the diameter of the final gear 49 determines the clearance in between the motor block to the ground. Accordingly, through the present invention said clearance is increased and the engine in its entirety exhibits an increased compactness.

As is indicated in Figure 6, a single-plate dry-type clutch 400 is selected to transfer the engine output from the output shaft 16 to the clutch output shaft 405 which leads to a gear transmission 47 which is not shown in detail. Reference numeral 404 denotes the driving catch plate bearing the clutch facing at a circumferential region at both sides thereof, engaging the central clutch sleeve of the friction clutch. A clutch ring 402 fastened to the clutch pressure plate 404 is thrust, tensioned by a clutch thrust spring assembly 401, 402 with the clutch operating linkage mechanism not shown in the drawing.

Figure 7 is a partial view similar to the right hand side of Figure 6 with the exception that instead of a friction clutch 400, a torque convertor 502 for providing a hydraulic fluid coupling from the output shaft 16 to an automatic transmission as provided. Normally, in case of unsing a continuously variable automatic transmission, the associated torque converter is provided on the crankshaft and, the outer diameter tends to become big in order to increase the power output. The afore-indicated design leads to the engine becoming taller. In contrast thereto, in the present case, the pump impeller 503 is bolted at 504 to a fly wheel 500 which, in turn, is fastened by screws 501 to the output end of the output shaft 16 protruding from the cyliner block 7. The torque convertor, as usual, implies a flow of hydraulic fluid actuated through the revolution of the pump impeller 503 through the impeller 505 slidably supported on the impeller output shaft 506 and stator 507 which, in a freewheel assembly through bearings 508 is supported at the housing 509. Accordingly, the diameter of the transmission case housing the torque converter (not shown), overlaps with the notional extent of the crankshaft reducing the necessary space in widthwise direction of the engine perpendicular to the crankshaft axis.

Through the present invention, specifically the following advantages and merits are gained:

Since the cylinder bank is inclined rearwards from the vertical and the output shaft is disposed slantly forwardly above the crankshaft in such a manner, that the plane L1, which includes both the crankshaft axis and the output shaft axis intersect at an acute angle with a plane L2 formed by the axis of the cylinder barrels. The plane L2 is considerably inclined upwards to approach the vertical resulting in a space saving compacted design of the engine. Moreover, in conjunction with said construction, the oil tank can be extended upwards and mounted to utilize the entire range of definite engine height enabling the forwardly projecting surface of the oil tank to be increased and to become increasingly exposed to the flow of cooling air, thus, improving the oil cooling capacity of the engine.

By means of the steeply inclined plane L2 to form an acute angle with the plane L1, the distance between the front wheel shafts 2 supporting the final drive gear 49 affixed thereto and the output shaft 16 becomes shorter enabling to reduce the pitch circle diameter of the final gear 49 considerably. Accordingly, the engine weight can be remarkably reduced. By means of reducing the final diameter of the gear, moreover, the distance in between the engine to the ground can be increased, as, normally, said distance substantially depends on said final gear diameter.

Moreover, since said oil tank which is adapted to reserve the engine oil for the automotive internal combustion engine, according to another aspect of the present invention, is disposed slantly forwardly of said upwardly inclined plane L2 facing the front side of the vehicle, the forwardly projected surface area of the oil tank can be increased while restraining the distance from the crankshaft axis to the bottom of the oil pan. Accordingly, despite of increasing the effective cooling surface of the oil tank, the overall engine height is kept constant or even reduced.

Accordingly the present invention provides an intenal combustion engine for automotive vehicles which has a small-sized compacted design and, improved cooling capabilities with respect to oil cooling and cooling of the accessory devices.

## Claims

1. An automotive internal combustion engine (4) comprising a crankshaft (6) extending transversely to the longitudinal axis of the vehicle, a cylinder bank which is inclined rearward and an output shaft (16) which is disposed in parallel with the crankshaft (6) for transmitting the output power of the crankshaft (6) to wheel shafts (2), wherein said output shaft (16) of the engine (4) is disposed slantly forwardly above said crankshaft (6) in such a manner that a plane (L2) including both the axis of the crankshaft (6) and the axis of the output shaft (16) intersects with a plane (L1) including the cylinder axis of the cylinder bank at an acute angle ϑ.

2. An automotive internal combustion engine as claimed in claim 1, **characterised in that** an oil tank (15) is disposed beneath the plane (L2) including both the axis of the crankshaft (6) and the axis of the output shaft (16) slantly forwardly with respect to the crankshaft/output shaft assembly (6,16), said oil tank (15) facing to the front of the vehicle.

3. An automotive internal combustion engine as claimed in at least one of the preceding claims 1 or 2, **characterised** **in that** the rearwardly inclined cylinder bank is adapted to overlay the front wheel shafts (2) of the vehicle, with the crankshaft (6) being disposed in front of said front wheel shafts (2).

4. An automotive internal combustion engine as claimed in any of the preceding claims 1-3, **characterised in that** each cylinder head (11) of each cylinder is supplied with intake air through an associated intake pipe (41) which is connected to a surge tank (42) which extends substantially in parallel to the cylinder bank above the oil tank (15) or the output shaft (16), supported on the cylinder block (7) through stays (43).

5. An automotive internal combustion engine as claimed in claim 4, **characterised in that** the air intake pipe (41) comprises a curved portion associated to the cylinder head (11) and neighboured to an alternator (52), and a straight section connected to the surge tank (42) at the end thereof.

6. An automotive internal combustion engine as claimed in any of the preceding claims 1-5, **characterised in that** the output shaft (16) supports an accessory drive pulley (50).

7. An automotive internal combustion engine as claimed in any of the preceding claims 1-6, **characterised in that** the output shaft (16) supports at the one end thereof a friction clutch, specifically a single-plate dry-type clutch (400) the output shaft of which is connected to a transmission (47).

8. An automotive internal combustion engine as claimed in any of the preceding claims 1-7, **characterised in that** the output shaft (16) supports at the one end thereof a torque converter (502) adapted to transfer the output power of the output shaft (16) via an impeller shaft (506) to an automatic transmission.

9. An automotive internal combustion engine as claimed in claim 5, **characterised in that** the surge tank (42) accommodates a throttle valve (44) at the air inlet side thereof and is tapered from the upstream inlet side to the downstream side of the surge tank (42), said gradually decreasing cross-sectional area of the surge tank (42) adapted to increase the air flow speed of the intake air in downstream direction.

10. An automotive internal combustion engine as claimed in claim 9, **characterised in that** a connecting angle in between the intake pipes (41) and the surge tank (42) varies along the surge tank (42) in a manner to allow air to be evenly supplied to each of the cylinders through the respective intake pipe (41).

11. An automotive internal combustion engine as claimed in at least one of the preceding claims 1-10, **characterised in** **that** the axis of a crankshaft (48) supporting the output side of the transmission (47) is disposed substantially at a notional plane containing the axis of the wheel shafts (2) and the axis of the output shaft (16) or is located adjacent thereto.

12. An automotive internal combustion engine as claimed in claim 11, **characterised in that** the diameter of the final gear (49) disposed of a wheel shaft (2) is reduced resulting in an increase of the distance in between the engine (4) of the vehicle and the ground resulting from the acute angle in between the plane (L1) including the cylinder axis of the cylinder bank and the other plane (L2) including both the axis of the crankshaft (6) and the axis of the output shaft (16).

## Patentansprüche

1. Kraftfahrzeugmotor (4) mit einer Kurbelwelle (6), die sich quer zur Längsrichtung des Fahrzeuges erstreckt, einer Zylinderbank, die nach rückwärts geneigt ist und einer Abtriebswelle (16), die parallel zur Kurbelwelle (6) angeordnet ist, um die Ausgangsleistung der Kurbelwelle (6) auf die Radwellen (2) zu übertragen, wobei die Abtriebswelle (16) des Motors (4) schräg vor der Kurbelwelle (6) derart angeordnet ist, daß eine Ebene (L2), die sowohl die Achse der Kurbelwelle (6) als auch die Achse der Abtriebswelle (16) enthält, unter einem spitzen Winkel (0) eine Ebene (L1) schneidet, die die Zylinderachse der Zylinderbank enthält.

2. Kraftfahrzeugmotor nach Anspruch 1, **dadurch gekennzeichnet,** daß ein Öltank (15) unterhalb der Ebene (L2), die sowohl die Achse der Kurbelwelle (6) als auch die Achse der Abtriebswelle (16) enthält, in bezug auf die Kurbelwellen-/Abtriebswellen-Anordnung (6, 16) schräg vor dieser angeordnet ist, wobei der Öltank (15) der Vorderseite des Fahrzeuges zugewandt ist.

3. Kraftfahrzeugmotor nach zumindest einem der vorhergehenden Ansprüche 1 oder 2, **dadurch gekennzeichnet,** daß die nach rückwärts geneigte Zylinderbank vorgesehen ist, um über den Vorderradwellen (2) des Fahrzeuges zu liegen, wobei die Kurbelwelle (6) vor den Vorderradwellen (2) angeordnet ist.

4. Kraftfahrzeugmotor nach zumindest einem der vorhergehenden Ansprüche 1 bis 3, **dadurch gekennzeichnet,** daß jeder Zylinderkopf (11) jedes Zylinders mit Ansaugluft durch ein zugehöriges Ansaugrohr (41) versorgt wird, daß mit einem Ausgleichsbehälter (42) verbunden ist, der sich im wesentlichen parallel zu der Zylinderbank über dem Öltank (15) oder der Abtriebswelle (16) erstreckt, gelagert an dem Zylinderblock (7) durch Halterungen (43).

5. Kraftfahrzeugmotor nach Anspruch 4, **dadurch gekennzeichnet,** daß das Luftansaugrohr (41) einen gekrümmten Abschnitt aufweist, der dem Zylinderkopf (11) zugeordnet und benachbart zu einer Lichtmaschine (52) ist und ein gerader Abschnitt mit dem Ausgleichsbehälter (42) an seinem Ende verbunden ist.

6. Kraftfahrzeugmotor nach einem der vorhergehenden Ansprüche 1 bis 5, **dadurch gekennzeichnet,** daß die Abtriebswelle (16) eine Antriebsriemenscheibe (50) für Hilfseinrichtungen lagert.

7. Kraftfahrzeugmotor nach einem der vorhergehenden Ansprüche 1 bis 6, **dadurch gekennzeichnet,** daß die Abtriebswelle (16) an ihrem einen Ende einen Reibungskupplung, insbesondere eine Einzelplatten-Kupplung (400) vom Trockentyp, lagert, deren Abtriebswelle mit einem Getriebe (47) verbunden ist.

8. Kraftfahrzeugmotor nach einem der vorhergehenden Ansprüche 1 bis 7, **dadurch gekennzeichnet,** daß die Abtriebswelle (16) an ihrem einen Ende einen Drehmomentenwandler (502) lagert, der vorgesehen ist, um die Abtriebsleistung der Abtriebswelle (16) über eine Laufradwelle (506) auf ein Automatikgetriebe zu übertragen.

9. Kraftfahrzeugmotor nach Anspruch 5, **dadurch gekennzeichnet,** daß der Ausgleichsbehälter (42) ein Drosselventil (44) an seiner Lufteinlaßseite aufnimmt und von der stromaufseitigen Einlaßseite zur stromabseitigen Seite des Auslaßbehälters (42) konisch verläuft, wobei die allmählich sich verringernde Querschnittsfläche des Ausgleichsbehälters (42) vorgesehen ist, um die Luftströmungsgeschwindigkeit der Ansaugluft in stromabseitiger Richtung zu erhöhen.

10. Kraftfahrzeugmotor nach Anspruch 9, **dadurch** **gekennzeichnet,** daß ein Verbindungswinkel zwischen den Ansaugrohren (41) und dem Ausgleichsbehälter (42) sich entlang des Ausgleichsbehälters (42) ändert, derart, um zu gestatten, daß die Luft gleichmäßig durch die jeweiligen Ansaugrohre (41) zu jedem der Zylinder verteilt wird.

11. Kraftfahrzeugmotor nach zumindest einem der vorhergehenden Ansprüche 1 bis 10, **dadurch gekennzeichnet,** daß die Achse der Kurbelwelle (48), die die Abtriebsseite des Getriebes (47) lagert, im wesentlichen in einer gedachten Ebene angeordnet ist, die die Achse der Radwellen (2) und die Achse der Abtriebswelle (16) enthält oder benachbart zu dieser angeordnet ist.

12. Kraftfahrzeugmotor nach Anspruch 11, **dadurch** **gekennzeichnet,** daß der Durchmesser des Endzahnrades (49), angeordnet auf einer Radwelle (2), vermindert ist, wobei dies zu einer Zunahme des Abstandes zwischen dem Motor (4) des Fahrzeuges und dem Boden führt, wobei dies von dem spitzen Winkel zwischen der Ebene (L1), die die Zylinderachse der Zylinderbank enthält, und die andere Ebene (L2), die sowohl die Achse der Kurbelwelle (6) als auch die Achse der Abtriebswelle (16) enthält, herrührt.

## Revendications

1. Un moteur à combustion interne pour automobiles (4) comprenant un vilebrequin (6) qui s'étend transversalement par rapport à l'axe longitudinal du véhicule, une batterie de cylindres inclinée vers l'arrière et un arbre de sortie (16) placé parallèlement par rapport au vilebrequin (6) pour transmettre la puissance de sortie du vilebrequin (6) aux arbres de roue (2), dans lequel ledit arbre de sortie (16) dudit moteur (4) occupe une position oblique vers l'avant au-dessus dudit vilebrequin (6) de façon à ce que le plan (L2) sur lequel se trouvent à la fois l'axe du vilebrequin (6) et l'axe de sortie (16) intersecte le plan (L1) sur lequel se trouve l'axe des cylindres de la batterie de cylindres, en formant un angle aigu (ϑ).

2. Un moteur à combustion interne pour automobiles selon la revendication 1, caractérisé par le fait que le carter à huile (15) est placé en-dessous du plan (L2) sur lequel se trouvent à la fois l'axe du vilebrequin (6) et l'axe de l'arbre de sortie (16) et occupe une position oblique vers l'avant par rapport à l'ensemble vilebrequin/arbre de sortie (6, 16), ledit carter à huile (15) étant dirigé vers l'avant du véhicule.

3. Un moteur à combustion interne pour automobiles selon au moins une des revendications précédentes 1 ou 2, caractérisé par le fait que la batterie de cylindres inclinée vers l'arrière est conçue de manière à chevaucher les arbres de roue avant (2) du véhicule, avec le vilebrequin (6) disposé à l'avant desdits arbres de roue avant (2).

4. Un moteur à combustion interne pour automobiles selon l'une quelconque des revendications précédentes 1 à 3, caractérisé par le fait que chacune des culasses (11) de chacun des cylindres est équipée d'une admission d'air par l'intermédiaire d'une tubulure d'admission d'air (41), qui lui est associée et qui est branchée sur le réservoir d'égalisation de pression (42) qui se projette substantiellement dans une direction parallèle à la batterie de cylindres au-dessus du carter à huile (15) ou l'arbre de sortie (16), reposant sur le bloc-moteur (7) par l'intermédiaire de tiges de support (43).

5. Un moteur à combustion interne pour automobiles selon la revendication 4, caractérisé par le fait que la tubulure d'admission d'air (41) comporte une partie courbe associée à la culasse (11) et située dans le voisinage dudit alternateur (52) et une section droite branchée à l'extrémité dudit réservoir d'égalisation de pression (42).

6. Un moteur à combustion interne pour automobiles selon l'une quelconque des revendications précédentes 1 à 5, caractérisé par le fait que l'arbre de sortie (16) supporte une poulie d'entraînement secondaire (50).

7. Un moteur à combustion interne pour automobiles selon l'une quelconque des revendications précédentes 1 à 6, caractérisé par le fait que l'arbre de sortie (16) supporte à une de ses extrémités un embrayage à friction, plus particulièrement un embrayage à un disque et du type à sec (400) dont l'arbre de sortie est raccordé sur la transmission (47).

8. Un moteur à combustion interne pour automobiles selon l'une quelconque des revendications précédentes 1 à 7, caractérisé par le fait que l'arbre de sortie (16) supporte à une de ses extrémités un convertisseur de couple (502) conçu pour transférer la puissance de sortie (16) par l'intermédiaire d'un arbre à turbine (506) vers la transmission automatique.

9. Un moteur à combustion interne pour automobiles selon la revendication 5, caractérisé par le fait que le réservoir d'égalisation de pression (42) comporte une soupape papillon (44) sur le côté admission d'air de ladite soupape et présente une conicité entre l'entrée amont et le côté aval du réservoir de surcharge (42), ladite conicité diminuant progressivement la section transversale dudit réservoir d'égalisation de pression (42) conçu pour accroître la vitesse du débit d'air de l'admission d'air en direction aval.

10. Un moteur à combustion interne pour automobiles selon la revendication 9, caractérisé par le fait qu'un angle de connexion entre les tubulures d'admission (41) et le réservoir d'égalisation de pression (42) varie le long du réservoir d'égalisation de pression (42) de façon à permettre l'admission régulièrement répartie de l'air à chaque cylindre au travers de chaque tubulure d'admission (41) respective.

11. Un moteur à combustion interne pour automobiles selon au moins une des revendications précédentes 1 à 10, caractérisé par le fait que l'axe de vilebrequin (48) supportant le côté sortie de la transmission (47) occupe (i) une position substantiellement dans un plan fictif sur lequel sont situés l'axe des arbres de roue (2) et l'axe de l'arbre de sortie (16) ou (ii) une position voisine dudit arbre de sortie (16).

12. Un moteur à combustion interne pour automobiles selon la revendication 11, caractérisé par le fait que le diamètre du pignon final (49) logé sur l'arbre de roue (2) est réduit, ce qui augmente la distance entre ledit moteur (4) du véhicule et le sol pour former un angle aigu (ϑ) entre ledit plan (L1) sur lequel est situé l'axe des cylindres de ladite batterie de cylindres et l'autre plan (L2) sur lequel sont situés à la fois l'axe du vilebrequin (6) et l'axe de l'arbre de sortie (16).
